# EUROPEAN PATENT SPECIFICATION

(11) **EP 3 629 619 B1**
(45) Date of publication and mention of the grant of the patent: **26.04.2023**
(21) Application number: 18817787.7
(22) Date of filing: 12.06.2018
(51) Int. Cl.: H04W 28/02, H04W 72/04, H04L 5/00

(54) **COMMUNICATIONS METHOD, USER EQUIPMENT, NETWORK EQUIPMENT AND COMMUNICATIONS SYSTEM**
KOMMUNIKATIONSVERFAHREN, BENUTZERGERÄT, NETZWERKAUSRÜSTUNG UND KOMMUNIKATIONSSYSTEM
PROCÉDÉ DE COMMUNICATION, ÉQUIPEMENT UTILISATEUR, ÉQUIPEMENT DE RÉSEAU, ET SYSTÈME DE COMMUNICATION

(30) Priority: 16.06.2017 CN 201710459638
(43) Date of publication of application: 01.04.2020
(73) Proprietor: Huawei Technologies Co., Ltd., Longgang District Shenzhen, Guangdong 518129 (CN)
(72) Inventor: LIU, Zhe, Shenzhen Guangdong 518129 (CN); TANG, Hao, Shenzhen Guangdong 518129 (CN); WANG, Fan, Shenzhen Guangdong 518129 (CN); LI, Junchao, Shenzhen Guangdong 518129 (CN); ZHOU, Guohua, Shenzhen Guangdong 518129 (CN)
(74) Representative: Körber, Martin Hans
(86) International application number: PCT/CN2018/090731
(87) International publication number: WO 2018/228350

(56) References cited:
- EP-A1- 3 509 343
- WO-A1-2018/085145
- CN-A- 102 934 370
- US-A1- 2013 114 579
- HUAWEI ET AL: "Resource allocation and indication for data channel", 3GPP DRAFT; R1-1705069, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 2 April 2017 (2017-04-02), XP051243200, Retrieved from the Internet: URL:http://www.3gpp.org/ftp/Meetings_3GPP_ SYNC/RAN1/Docs/ [retrieved on 2017-04-02]
- HUAWEI ET AL: "Discussion on UE RF Bandwidth Adaptation in NR", 3GPP DRAFT; R4-1700127 [NR] DISCUSSION ON UE RF BANDWIDTH ADAPTATION IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG4, no. Spokane, Wa; 20170117 - 20170119 6 January 2017 (2017-01-06), XP051213445, Retrieved from the Internet: URL:http://www.3gpp.org/ftp/Meetings_3GPP_ SYNC/RAN4/Docs/ [retrieved on 2017-01-06]
- HUAWEI ET AL: "Bandwidth part activation and adaptation", 3GPP DRAFT; R1-1712155, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20170821 - 20170825 20 August 2017 (2017-08-20), XP051314974, Retrieved from the Internet: URL:http://www.3gpp.org/ftp/Meetings_3GPP_ SYNC/RAN1/Docs/ [retrieved on 2017-08-20]
- Mediatek Inc.: "Efficient Wider Bandwidth Operations for NR", 3GPP TSG-RAN WG1 meeting #89 R1-1707828, no. R1-1707828, 7 May 2017 (2017-05-07), XP051263128, Hangzhou, China
- HUAWEI ET AL: "On bandwidth part and bandwidth adaptation", 3GPP DRAFT; R1-1706900, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou, China; 20170515 - 20170519 14 May 2017 (2017-05-14), XP051272131, Retrieved from the Internet: URL:http://www.3gpp.org/ftp/Meetings_3GPP_ SYNC/RAN1/Docs/ [retrieved on 2017-05-14]

## Description

This application claims priority to Chinese Patent Application No. 201710459638.5 filed with the Chinese Patent Office on June 16, 2017 and entitled "COMMUNICATION METHOD, USER EQUIPMENT, NETWORK DEVICE, AND COMMUNICATIONS SYSTEM".

### TECHNICAL FIELD

This application relates to the communications field, and more specifically, to a communication method for bandwidth part switching and an apparatus for implementing the method.

### BACKGROUND

In a long term evolution (Long Term Evolution, LTE) system, a carrier bandwidth, namely, a system bandwidth, is equal to a radio frequency (Radio Frequency, RF) bandwidth of user equipment (User Equipment, UE). The UE needs to detect the entire carrier bandwidth during working. This causes very high power consumption of the UE, and is unhelpful for effective use of frequency domain resources.
New radio (New Radio, NR) of a 5th-generation (5th-Generation, 5G) mobile communications technology supports a component carrier (Component Carrier, CC), in particular, a wideband (wideband) CC, namely, a big wideband. To reduce power consumption of the UE, NR is designed to support an RF bandwidth of the UE that is less than a CC bandwidth. An RF center frequency location may be tuned on the CC, to meet frequency domain resource scheduling of a network device and a service requirement. In addition, to improve usage of the CC bandwidth, the network device allocates an operating bandwidth to the UE. The operating bandwidth is a part of the CC bandwidth, and is referred to as a bandwidth part (Bandwidth Part, BP).

The UE transmits control information and data in the BP allocated by the network device. The BP falls within the RF bandwidth of the UE. This requires the UE to tune the RF center frequency location in a timely manner, to enable the RF bandwidth to cover the BP in the CC bandwidth.

Common NR UE works on only one CC, but NR UE that has a carrier aggregation capability can work on a plurality of CCs, and simultaneously working on the plurality of CCs can improve a throughput and optimize user experience. There usually may be one or more CCs in one band (band) in NR.

Huawei et al., "Resource allocation and indication for data channel" 3GPP draft; R1-1705069, 3rd generation partnership project (3GPP), Mobile competence center, France, Vol. RAN WG1, USA, 2 April 2017 discloses Resource allocation and indication for data channel. Huawei et al., "Discussion on UE RF Bandwidth Adaptation in NR" 3GPP draft; R4-1700127 [NR], 3rd generation partnership project (3GPP), Mobile competence center, France, Vol. RAN WG4, USA, 6 January 2017 relates to discussion on UE RF bandwidth adaptation in NR. EP 3535917 A1 discloses receiver bandwidth adaptation. Huawei et al., "On bandwidth part and bandwidth adaptation" 3GPP draft; R1-1706900, 3rd generation partnership project (3GPP), Mobile competence center, France, Vol. RAN WG1, China discloses bandwidth part and bandwidth adaptation.

In an existing solution, the network device usually sets a long enough guard interval when the UE is switched between BPs, to enable the UE to complete BP switching, and consequently a waste of time domain resources is caused. Therefore, how to properly set a guard interval when the UE is switched between BPs becomes a technical problem urgently to be resolved.

### SUMMARY

This application provides a communication method according to independent claims 1 and 5 and an apparatus comprising means for implementing the method according to claim 10. The invention provides the communication method and the apparatus so that a network device is possibly prevented from allocating an excessively long guard interval to UE for BP switching, and a waste of time domain resources is possibly avoided.

Additional features of the invention are provided in the dependent claims. In the following, parts of the description and drawings referring to embodiments which are not covered by the claims are not presented as embodiments of the invention, but as examples useful for understanding the invention.

### BRIEF DESCRIPTION OF DRAWINGS

FIG 1 is a schematic diagram of a BP switching method;
FIG 2 is a schematic diagram of an RF center frequency location according to an embodiment of this application;
FIG 3 is a schematic flowchart of a communication method according to an embodiment of this application;
FIG 4 is a schematic diagram of BP group division according to an embodiment of this application;
FIG 5 is a schematic diagram of BP group division according to another embodiment of this application;
FIG 6 is a schematic flowchart of a communication method according to another embodiment of this application;
FIG 7 is a schematic flowchart of a communication method according to another embodiment of this application;
FIG 8 is a schematic block diagram of user equipment according to an embodiment of this application;
FIG 9 is a schematic block diagram of user equipment according to another embodiment of this application;
FIG 10 is a schematic block diagram of a network device according to an embodiment of this application;
FIG 11 is a schematic block diagram of a network device according to another embodiment of this application;
FIG 12 is a schematic block diagram of user equipment according to another embodiment of this application;
FIG 13 is a schematic block diagram of user equipment according to another embodiment of this application;
FIG 14 is a schematic block diagram of a network device according to another embodiment of this application; and
FIG 15 is a schematic block diagram of a network device according to another embodiment of this application.

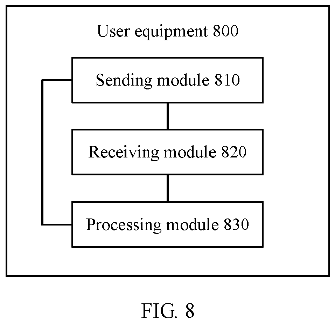

It is noted that embodiments in FIG 8 to 15 are not part of the invention but only illustrative examples for understanding the invention.

### DESCRIPTION OF EMBODIMENTS

The following describes technical solutions of this application with reference to accompanying drawings.

Embodiments of this application relate to user equipment (User Equipment, UE). The user equipment may be a terminal device, an access terminal, a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, a vehicle-mounted device, a wearable device, a terminal device in a future 5G network or a post-5G network, or the like. This is not limited in the embodiments of this application.

The embodiments of this application further relate to a network device. The network device may be a device configured to communicate with a terminal device, for example, may be a base transceiver station (Base Transceiver Station, BTS) in a global system for mobile communications (Global System for Mobile Communications, GSM) or CDMA system, or may be a NodeB (NodeB, NB) in a wideband code division multiple access (Wideband Code Division Multiple Access, WCDMA) system, or may be an evolved NodeB (evolved Node B, eNB or eNodeB) in an LTE system; or the network device may be a relay node, an access point, a vehicle-mounted device, a wearable device, a gNB in a 5G system, a network device in a post-5G network, a network device in a future evolved public land mobile network (Public Land Mobile Network, PLMN) system, or the like.

In the LTE system, a CC with a 20M bandwidth includes 100 resource blocks (Resource Block, RB) each with a 15 kHz subcarrier spacing (Subcarrier Spacing, SCS). From a perspective of resource usage, a 20M carrier in the LTE system includes only 100 RBs, and an effective transmission bandwidth of the carrier is 15 × 12 × 100 = 18 MHz and is less than the 20M carrier bandwidth, to meet a limitation condition for an adjacent channel leakage ratio (Adjacent Channel Leakage Ratio, ACLR) in the RAN4. A wideband CC, CC for short, supported by NR in a 5G mobile communications technology decouples a system bandwidth and an operating bandwidth of UE. A quantity of RBs included in the CC is the system bandwidth, and different RBs may have different subcarrier spacings.

From a perspective of a subcarrier, UE served by a carrier can use only one type of subcarrier spacing at a moment, but the UE has different subcarrier spacing requirements at different moments. A network device divides an entire CC into a plurality of BPs based on a current service status of each UE. For example, a 100M CC may be divided into one 20M BP with a 15 kHz subcarrier spacing (that is, the BP includes a maximum of 111 RBs each with a 15 kHz subcarrier spacing), one 40M BP with a 30 kHz subcarrier spacing (the BP includes a maximum of 111 RBs each with a 30 kHz subcarrier spacing), and one 40M BP with a 60 kHz subcarrier spacing (the BP includes a maximum of 55 RBs each with a 60 kHz subcarrier spacing). For UE with an RF bandwidth of only 40M, when the UE needs to transmit data by using a 15 kHz subcarrier spacing, the network device may allocate a 20M BP with a 15 kHz subcarrier spacing to the UE; when the UE needs to transmit data by using a 30 kHz subcarrier spacing, the network device may allocate a 40M BP with a 30 kHz subcarrier spacing to the UE; and when the UE needs to transmit data by using a 60 kHz subcarrier spacing, the network device may allocate a 40M BP with a 60 kHz subcarrier spacing to the UE. In this way, the UE needs to be switched between different BPs.

In an existing solution, UE has one RF module, and an RF bandwidth is fixed. For example, for UE with a 100M maximum bandwidth, an RF bandwidth of the UE is either active or inactive. In another existing solution, UE may be switched between a relatively small maximum bandwidth (for example, a first maximum bandwidth) and a relatively large maximum bandwidth (for example, a second maximum bandwidth), for example, the first maximum bandwidth is 10M, and the second maximum bandwidth is 100M, but an RF bandwidth cannot be switched to a bandwidth of another granularity. Switching between the first maximum bandwidth and the second maximum bandwidth may be implemented based on one RF module, or may be implemented based on two RF modules. This is not limited in the embodiments of this application.

There are three cases in which UE performs RF retuning (retuning) or RF switching.

In a first case (type 1), intra-band (intra-band) RF switching is performed. An RF center frequency location does not need to be tuned, and only an RF bandwidth size needs to be tuned. In this case, a time during which the UE performs RF switching is usually 0 µs to 20 µs.

In a second case (type 2), intra-band RF switching is performed. An RF center frequency location needs to be retuned, and a time during which the UE performs RF switching is usually 50 µs to 200 µs.

In a third case (type 3), inter-band (inter-band) RF switching is performed. An RF center frequency location needs to be retuned, and because inter-band tuning is performed on the RF center frequency location, a time during which the UE performs switching is usually 200 µs to 900 µs.

In a scenario to which the embodiments of this application are applied, UE needs to tune an RF center frequency location in a timely manner, so that an RF bandwidth can cover, in a CC bandwidth, a BP (namely, an active (active) BP) on which the UE works. In an existing solution, because a location relationship between an RF bandwidth and a BP is complex, there are specifically four cases in which UE is switched between BPs.

In a first case (Alt 1), BP switching is performed in an RF bandwidth, in other words, neither an RF bandwidth size nor an RF center frequency location needs to be tuned during BP switching. In this case, a guard interval of RF retuning usually needs to be 0 symbols for BP switching.

In a second case (Alt 2), BP switching is performed in a CC, but a BP before switching and a BP after switching exceed an RF bandwidth capability of the UE, and therefore the UE needs to tune an RF bandwidth size or an RF center frequency location. If only the RF bandwidth size needs to be tuned, a guard time of RF retuning needs to be about 0 µs to 20 µs for BP switching; or if the UE needs to tune the RF center frequency location during BP switching, a guard interval of RF retuning needs to be about 50 µs to 200 µs for BP switching.

In a third case (Alt 3), switching is performed from a BP on a CC to a BP on another CC in a same band. Because intra-band RF switching is required, a guard interval of RF retuning needs to be about 50 µs to 200 µs for BP switching.

In a fourth case (Alt 4), the UE needs to be switched from a BP on a CC in a band to a BP on a CC in another band. Because inter-band RF switching is required, a guard interval of RF retuning needs to be about 200 µs to 900 µs for BP switching.

In the embodiments of this application, only the Alt 1, the branch in which only the RF center frequency location needs to be tuned in the Alt 2, and the Alt 3 are used as examples for description. When BP switching relates to switching between a first RF bandwidth and a second RF bandwidth, BP switching is equivalent to BP switching between two BP groups in the following, and BPs included in the first RF bandwidth may be placed in one BP group. The following mainly performs description by using an example in which an RF bandwidth of UE is fixed and an RF center frequency location is tuned in only one wideband CC, so that a tuned RF can cover a BP on which the UE works. A principle of another case is similar to this, and details are not described. In an existing solution, because the location relationship between an RF bandwidth and a BP is complex, a network device usually allocates a long enough guard interval to UE for BP switching, and consequently a waste of time domain resources is caused.

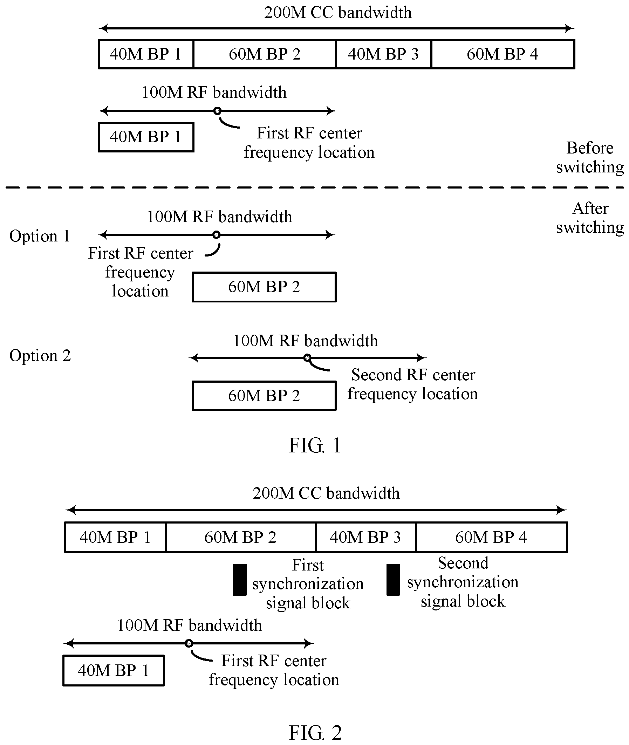

FIG 1 is a schematic diagram of an existing BP switching method. In an example shown in FIG 1, UE has a 100M RF bandwidth, and an RF center frequency location of the UE can be tuned, so that the RF bandwidth can slide on one or more CCs. A CC bandwidth is 200M, and a network device divides the CC bandwidth into four BPs: a 40M BP 1, a 60M BP 2, a 40M BP 3, and a 60M BP 4. A first RF center frequency location at which the UE currently works is shown in a state before switching in FIG 1, and the first RF center frequency location enables the RF bandwidth to cover the 40M BP 1 and the 60M BP 2. A first BP on which the UE currently works is also shown in the state before switching in FIG 1 and is the 40M BP 1. There are two options when the UE is switched from the first BP on which the UE currently works to a target second BP. As shown in FIG 1, an option 1 (option 1) is that the RF center frequency location is unchanged, in other words, the first RF center frequency location is still maintained, and in this case, a time (the time may be an absolute time length, or may be a quantity of symbols corresponding to an absolute time length in a numerology, which is described in detail below) of RF retuning (retuning) that is required when the UE is switched from the first BP to the second BP is 0. An option 2 (option 2) is that the RF center frequency location is changed to a second RF center frequency location shown in FIG 1 (the second RF center frequency location enables the RF bandwidth to cover the 60M BP 2 and the 40M BP 3), and in this case, a time of RF retuning that is required when the UE is switched from the first BP to the second BP is 50 µs to 200 µs, and a specific time vary with a capability of the UE. In an existing solution, the network device usually allocates a long enough guard interval to the UE for BP switching, for example, the guard interval is equal to the time that is of RF retuning in the type 2 and that is reported by the UE, that is, a time of 200 µs of RF retuning that is reported by the UE in the type 2. For the option 1 (option 1) or for UE with a relatively strong RF retuning capability, setting a guard interval to 200 µs causes a waste of time domain resources.

It should be understood that the BP in embodiments of this application, for example, the first BP and/or the second BP, may be a downlink BP, and the downlink BP may include a control resource set (Control Resource Set, CORESET) and/or a physical downlink shared channel (Physical Downlink Shared CHannel, PDSCH); or may be an uplink BP, and the uplink BP may include a physical uplink shared channel (Physical Uplink Shared CHannel, PUSCH), a physical uplink control channel (Physical Uplink Control CHannel, PUCCH), a physical random access channel (Physical Random Access CHannel, PRACH), or a sounding reference signal (Sounding Reference Signal, SRS); or may be a sounding reference signal-only (Sounding Reference Signal-only, SRS-only) BP; or may be another BP. This is not limited in embodiments of this application.

In each embodiment of this application, the UE reports (sends) RF-related information to the network device, including at least one piece of RF bandwidth capability information, RF center frequency location information (for example, first RF center frequency location information and second RF center frequency location information), and RF retuning capability information. Certainly, the RF-related information may further include information other than the three types of information. This is not limited in embodiments of this application. Various types of RF-related information may be separately sent, or may be partially sent together, or may be completely sent together. This is not limited in embodiments of this application, either.

The RF bandwidth capability information is used to indicate a maximum bandwidth supported by at least one RF module of the user equipment. Different RF modules of different UEs may support different maximum bandwidths. For example, for a type of UE having only one RF module, maximum bandwidths supported by some UEs are 100M, and maximum bandwidths supported by the other UEs are 60M. For another example, for UE having a plurality of RF modules, a maximum bandwidth supported by one RF module is 100M, and a maximum bandwidth supported by another RF module is 60M.

UE having only one RF module is used as an example. For a manner in which the UE sends the RF bandwidth capability information to the network device, in a specific example, 20 types of bandwidth granularities: {5M, 10M, 15M, 20M, 25M, 30M, 35M, 40M, 45M, 50M, 55M, 60M, 65M, 70M, 75M, 80M, 85M, 90M, 95M, 100M} may be predefined in a protocol, and the UE uses '00000' to '10011' of 5 bits to respectively correspond to the total of 20 types of bandwidths of 5M to 100M, to report a maximum bandwidth supported by the UE. When the UE supports a 100M maximum bandwidth, the UE reports '10011'. When the UE supports a 60M maximum bandwidth, the UE reports '0 1011'. A quantity of bits (bit) required by the UE to report the RF bandwidth capability information to the network device is related to the maximum bandwidth supported by the UE and a change granularity that is of the maximum bandwidth supported by the UE and that needs to be defined. The system may freely design the quantity of bits as required. This is not limited in embodiments of this application.

For the manner in which the UE sends the RF bandwidth capability information to the network device, in another specific example, for UE having a plurality of RF modules, maximum bandwidths, for example, a 10M RF bandwidth and a 100M RF bandwidth, supported by two RF modules of the UE may be reported. Specifically, for example, maximum bandwidths supported by the UE may include {10M, 30M, 60M, 100M}. Therefore, the maximum bandwidths supported by the UE may be mapped in a bitmap (bitmap) manner. For UE that supports a 10M RF bandwidth and a 100M RF bandwidth, maximum bandwidth capability information sent by the UE to the network device may be '1001'. A quantity of bits (bit) in a bitmap required by the UE to report the RF bandwidth capability information to the network device is related to a total quantity of maximum bandwidths supported by all UEs that access the network device. The system may freely design the quantity of bits as required. This is not limited in embodiments of this application.

In embodiments of this application, the foregoing manners in which the UE sends the RF bandwidth capability information to the network device are merely examples rather than limitations. The UE may alternatively use another manner to correspond to the maximum bandwidth supported by the UE. Details are not described in embodiments of this application.

The RF center frequency location information is used to indicate an RF center frequency location at which the user equipment works. For example, in this specification, the first RF center frequency location information is used to indicate an RF center frequency location at which the user equipment currently works (on the first BP). The second RF center frequency location information is used to indicate an RF center frequency location at which the user equipment works after the user equipment is switched from the first BP to the second BP.

Specifically, when the UE sends the RF center frequency location information to the network device, the UE may directly report an absolute frequency number corresponding to an RF center frequency of the UE. The absolute frequency number is related to a raster (raster) definition and a band (band) definition of a carrier. For example, in an LTE system, the absolute frequency number is represented by using a 16-bit binary number, and a specific location of a band to which the center frequency belongs is known if the absolute frequency number is known. For example, in LTE, a raster is 100 kHz and absolute frequency numbers 0 to 599 correspond to a band 1 (2110 MHz to 2170 MHz). In this case, if the absolute frequency number is 0, the absolute frequency number corresponds to 2110 MHz; or if the absolute frequency number is 599, the absolute frequency number corresponds to 2169.9 MHz. NR UE may report RF center frequency information by using an absolute frequency number in NR, where the absolute frequency number in NR is related to a raster definition and a band definition in NR.

When the UE sends the RF center frequency location information to the network device, the UE may alternatively report an offset bandwidth of an RF center frequency relative to a center frequency of a synchronization signal block (Synchronization Signal block, SS block). The offset bandwidth may be represented by using an absolute bandwidth value, or may be represented by using a quantity of reference physical resource blocks (Physical Resource Block, PRB), or may be represented in another manner. This is not limited in embodiments of this application. Numerology used by the reference PRB is a PRB with a 15 kHz subcarrier spacing. Certainly, another subcarrier spacing value may be predefined in the protocol. This is not limited in embodiments of this application. FIG 2 is a schematic diagram of an RF center frequency location according to an embodiment of this application. As shown in FIG 2, a location of an RF center frequency location of UE that uses a 40M BP 1 relative to a first SS block shown in FIG 2 is -20M.

In embodiments of this application, the RF center frequency location information may alternatively be sent in another manner, and details are not described herein.

The foregoing describes there are three cases, namely, the type 1 to the type 3, when the UE performs RF retuning. Embodiments of this application relates to only the type 2 and the type 3. In embodiments of this application, the UE sends the RF retuning capability information to the network device; and if the UE does not relate to inter-band RF retuning, the UE may send only an RF retuning capability related to the type 2; or if the UE relates to inter-band RF retuning, the UE may send RF retuning capabilities related to the type 2 and the type 3. For unity, RF retuning capabilities related to the type 1 to the type 3 may be sent together. This is not limited in embodiments of this application.

In the following, an example in which the UE reports the RF retuning capabilities related to the type 1 to the type 3 is used for detailed description.

In a manner, the RF retuning capabilities are reported at a uniform granularity. When the three types of RF retuning capabilities are reported at a granularity of 5 µs, there are a total of 181 values from 0 µs to 900 µs, and a total of 8 bits are required to report one of the three types of RF retuning capabilities. When the three types of RF retuning capabilities are reported at a granularity of 1 µs, there are a total of 901 values from 0 µs to 900 µs, and a total of 10 bits are required to report one of the three types of RF retuning capabilities.

In another manner, the RF retuning capabilities are reported at a non-uniform granularity. For example, a granularity of an RF retuning capability in the type 1 is 1 µs (21 possibilities), a granularity of an RF retuning capability in the type 2 is 5 µs (a total of 36 possibilities from 20 µs to 200 µs), and a granularity of an RF retuning capability in the type 3 is 10 µs (a total of 70 possibilities from 200 µs to 900 µs). Therefore, a total of 127 possibilities may need to be reported, and a total of 7 bits are required to report one of the three types of RF retuning capabilities. A time of the RF retuning capability may be rounded up. For example, if RF retuning actually requires 0.5 µs, an RF retuning capability reported during reporting may be 1 µs.

Alternatively, a subcarrier spacing used by the user equipment or a reference subcarrier spacing is used as a reference, and when reporting the three types of RF retuning capabilities, the UE directly reports quantities of required symbols. For example, when the subcarrier spacing currently used by the UE or the reference subcarrier spacing is 15 kHz, the user equipment reports 0.5 OFDM symbol for an RF retuning capability in the type 1 and reports one OFDM symbol to three OFDM symbols for an RF retuning capability in the type 2, and a symbol granularity is 0.5. Because a reporting granularity is 0.5 15 kHz OFDM symbol, the granularity is relatively large, and fewer bits are required for reporting.

It should be understood that the RF retuning capability information in each embodiment of this application is used to indicate a time required by the user equipment to retune the RF center frequency location. The time may be an absolute time length, or may be a quantity of symbols corresponding to an absolute time length in a numerology. For example, in a 30 kHz subcarrier spacing, 20 µs may correspond to one symbol in a normal cyclic prefix (Cyclic Prefix, CP). This is not limited in embodiments of this application.

In embodiments of this application, the foregoing manners in which the UE sends the RF retuning capability information to the network device are merely examples rather than limitations. The UE may alternatively send the RF retuning capability information in another manner. Details are not described in embodiments of this application.

In some embodiments of this application, the network device sends BP configuration information to the UE. The BP configuration information includes information that is used to indicate a size and a location of a BP in a component carrier (Component Carrier, CC). The size of the BP is a bandwidth of the BP, for example, a quantity of PRBs included in the BP, and the location of the BP is a location of the BP in frequency domain, for example, a start PRB number or an end PRB number. Alternatively, the size of the BP may be in a unit of MHz, and location information of the BP in frequency domain may be a start frequency location on a carrier. For example, for the 200M carrier in FIG 1, the BPs are numbered from left to right, a size of the BP 1 is 40 MHz, a start frequency location of the BP 1 is 0 MHz, and an end frequency location of the BP 1 is 40 MHz; a size of the BP 2 is 60 MHz, a start frequency location of the BP 2 is 40 MHz, and an end frequency location of the BP 2 is 100 MHz; and the like. The BP configuration information may further include information that is used to indicate a subcarrier spacing of the BP and/or information that is used to indicate a CORESET. The BP configuration information may further include other related information. This is not limited in embodiments of this application.

It should be understood that BP division and the BP configuration information in embodiments of this application may be preset by the system, or may be determined by the network device based on the RF bandwidth capability information of the UE, namely, the RF bandwidth supported by the UE. This is not limited in embodiments of this application.

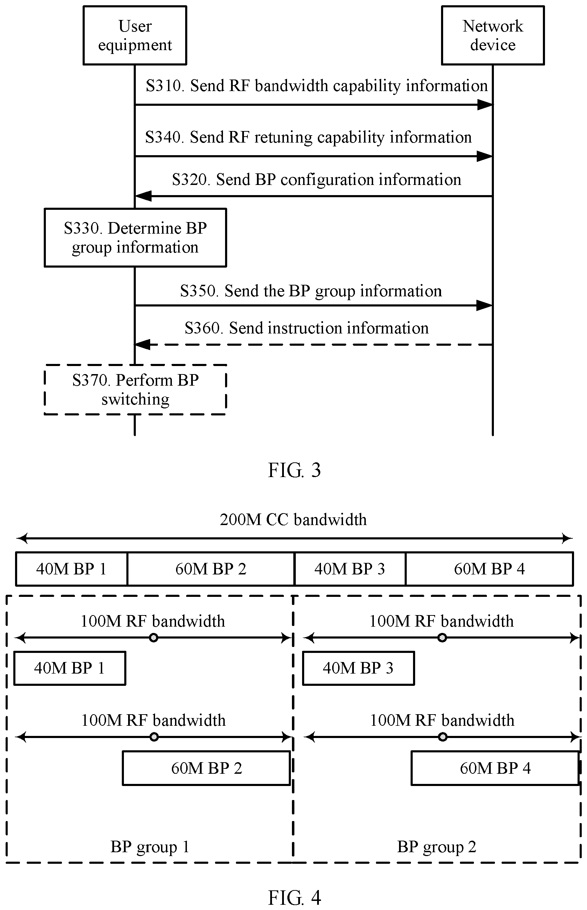

To resolve the problem in the existing solution, the embodiments of this application provide a communication method. FIG 3 is a schematic flowchart of a communication method 300 according to an embodiment of this application. The method 300 may include the following steps.

S310. User equipment sends RF bandwidth capability information to a network device, and correspondingly, the network device receives the radio frequency RF bandwidth capability information sent by the user equipment. The user equipment may currently work on a first BP, in other words, an active (active) BP of the user equipment is the first BP. The RF bandwidth capability information is used to indicate a maximum bandwidth supported by at least one RF module of the user equipment.

S320. The user equipment receives BP configuration information sent by the network device, and correspondingly, the network device sends the BP configuration information to the user equipment. The BP configuration information includes information that is used to indicate a size and a location of a BP in a CC.

S330. The user equipment determines BP group information, where the BP group information is used to indicate at least one BP group, one of the at least one BP group includes at least one BP, the at least one BP group includes a first BP group, the first BP group includes a first BP, and when the first BP group further includes a second BP, a guard interval of RF retuning that is required when the user equipment is switched from the first BP to the second BP is less than a preset threshold.

It should be understood that, that the BP group information is used to indicate at least one BP group and one of the at least one BP group includes at least one BP means that the BP group information is used to indicate the at least one BP group and a BP included in each of the at least one BP group. In other words, each of the at least one BP group includes at least one BP.

The threshold may be in a unit of µs, for example, 0 µs or 1 µs. Alternatively, the threshold may be in a unit of a time domain symbol, for example, 0 symbols or 1 symbol. It should be understood that when BP switching in the first BP group is performed, for example, when the UE is switched from the first BP to the second BP, the UE does not need to switch an RF center frequency location. Therefore, the required guard interval is 0 or almost 0. Optionally, for the first BP and the second BP in the first BP group, the guard interval of RF retuning that is required when the user equipment is switched from the first BP to the second BP is 0 symbols.

In embodiments of this application, the user equipment may determine, in two manners, that the guard interval of RF retuning that is required when the user equipment is switched from the first BP to the second BP is 0 symbols. In one manner, the UE determines, based on an RF retuning capability of the UE, that the guard interval of RF retuning that is required when the user equipment is switched from the first BP to the second BP is 0 symbols. In the other manner, the UE receives indication information from a base station, where the indication information is used to indicate that the guard interval is 0 symbols.

The guard interval indicated by the indication information may be an absolute time length, for example, 0 µs; or may be a quantity of symbols corresponding to an absolute time length of 0 µs in a numerology, for example, 0 symbols.

The BP group (group) information includes the at least one BP group, and each BP group includes the at least one BP.

It should be understood that a combined bandwidth of BPs in each BP group is less than or equal to the maximum bandwidth. That is, only when the combined bandwidth of the BPs in the BP group is less than or equal to the maximum bandwidth, the UE may be directly switched between BPs without switching the RF center frequency location, and the BPs are still within a coverage area of an RF bandwidth. The combined bandwidth of the BPs in the BP group is a bandwidth jointly spanned by all BPs in the BP group. In other words, the combined bandwidth of the BPs in the BP group is a maximum value of a frequency domain span of any two BPs in the BP group. If the BP is defined in a unit of RB, the combined bandwidth of the BP group is less than the maximum bandwidth. If a bandwidth of the BP is defined in a unit of MHz (M for short), the combined bandwidth of the BP group may be less than or equal to the maximum bandwidth. For ease of understanding, MHz is used as an example for description in this specification. A case in which the BP is in a unit of RB is similar to this, and details are not described in this specification. For example, the first BP group includes the first BP and the second BP, a bandwidth of the first BP is 30M, a bandwidth of the second BP is 50 M, and an interval between the first BP and the second BP is 20M. In this case, a combined bandwidth of the first BP and the second BP is 100M. For another example, the first BP group includes the first BP and the second BP, a bandwidth of the first BP is 40M, a bandwidth of the second BP is 60M, and there is a 10M overlap between the first BP and the second BP. In this case, a combined bandwidth of the first BP and the second BP is 90M.

In embodiments of this application, in a case, the at least one BP group may further include a second BP group, and when the second BP group includes a third BP, a guard interval of RF retuning that is required when the user equipment is switched from the first BP to the third BP is greater than 0 symbols. Specifically, in embodiments of this application, when the UE is switched between two BPs (for example, the first BP and the third BP) that belong to different BP groups, the case is the foregoing type 2 (the first BP and the third BP belong to a same CC or the first BP and the third BP belong to two different CCs in a same band) or the foregoing type 3 (the first BP and the third BP belong to two different CCs in two different bands), a required guard interval is greater than 0, and a specific guard interval value is determined based on the RF retuning capability of the UE.

In conclusion, when the UE is switched between BPs in a BP group, a time required for RF retuning is 0, and a guard interval is clear and may be 0 or a very small value (a baseband preparation time is less than the time required for RF retuning, and a guard interval of RF retuning required for BP switching in the BP group is 0 symbols. If a total of required guard interval includes the baseband preparation time, the guard interval for BP switching may be 1 symbol. The guard interval of RF retuning required for BP switching is less than the guard interval required for BP switching). When the UE is switched between BPs in BP groups, if the UE and the network device learn that the UE needs to perform RF retuning in this case, the UE and the network device naturally know that the guard interval is to be set based on the RF retuning capability reported by the UE.

The user equipment determines BP group information includes: The user equipment determines the BP group information based on the RF bandwidth capability information, the BP configuration information, and an RF center frequency location (namely, a center frequency location of an active RF) at which the user equipment currently works. A principle of BP group division by the UE may include: determining, based on the RF center frequency location at which the UE currently works, a size and a location of a BP on which the UE currently works, and a size and a location of another available BP of the UE, a BP to which the UE may be directly switched without tuning the RF center frequency location; and placing the BP and the BP on which the UE currently works in one BP group, and placing the remaining BPs in the other BP group. Each time the UE is switched to another BP group, the UE needs to re-determine a BP group based on a current RF center frequency location, the BP configuration information, and the RF bandwidth capability, and report the BP group. When inter-BP-group BP switching is required next time, the processes in S330 and S350 are repeatedly performed. Alternatively, the UE groups all available BPs of the UE. Each time BP switching is required, reference can be made only to the grouping.

S340. The user equipment sends RF retuning (retuning) capability information to the network device, and correspondingly, the network device receives the RF retuning (retuning) capability information sent by the user equipment. The RF retuning capability information is used to indicate a time required by the user equipment to retune the RF center frequency location. S340 and S310 may be simultaneously performed, or the RF bandwidth capability information and the RF retuning capability information are carried in one piece of signaling for simultaneous sending and usually may be sent in an initial stage when the UE establishes a connection to the network device. Certainly, the RF bandwidth capability information and the RF retuning capability information may be separately sent. This is not limited in embodiments of this application.

S350. The user equipment sends the BP group information to the network device, and correspondingly, the network device receives the BP group information sent by the user equipment (in other words, the network device determines the BP group information). In this way, the UE and the network device set a guard interval based on the BP group information. Because the network device has sent the BP configuration information to the UE, the BP group information sent by the UE to the network device may include only an index (index) or identification information of each BP included in the BP group information.

For example, FIG 4 is a schematic diagram of BP group division according to an embodiment of this application. As shown in FIG 4, the four BPs in the 200M CC bandwidth shown in FIG 1 and FIG 2 are divided into two BP groups: a BP group 1 and a BP group 2. The BP group 1 includes {BP 1, BP 2}, and the BP group 2 includes {BP 3, BP 4}.

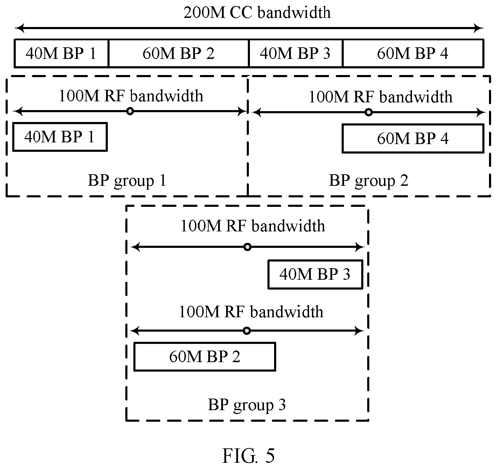

For another example, FIG 5 is a schematic diagram of BP group division according to another embodiment of this application. As shown in FIG 5, the four BPs in the 200M CC bandwidth shown in FIG 1 and FIG 2 are divided into three BP groups: a BP group 1, a BP group 2, and a BP group 3. The BP group 1 includes {BP 1}, the BP group 2 includes {BP 2, BP 3}, and the BP group 3 includes {BP 4}.

If a BP on which the user equipment currently works is the BP 1, and a current first RF center frequency location is shown in FIG 5, the BP group division may be further performed in the following manner: The UE places the BP 1 in one BP group, and places the remaining BP 2, BP 3, and BP 4 in the other BP group. In this case, after the UE is switched from the BP 1 to the BP 2, it indicates that the RF center frequency location of the UE is to be retuned, a time required for retuning is a time reported by the UE, and the RF center frequency location is tuned to an RF center frequency location shown in the BP group 3 in FIG 5. The UE reports new BP group information. Herein, one updated BP group includes the BP 2 and the BP 3, and the other updated BP group includes the BP 1 and the BP 4. When the UE needs to be switched from the BP 2 to the BP 3 next time, because the target BP 3 and the BP 2 on which the UE currently works are in the same BP group, a guard time of RF retuning required for BP switching is 0 symbols. After the UE is switched to the BP 3, a process in which switching is performed after the UE performs BP group division and reporting is repeatedly performed.

Alternatively, the UE groups all available BPs of the UE. A grouping result is shown in FIG 5. The BP group 1 includes only the BP 1, the BP group 2 includes only the BP 4, and the BP group 3 includes the BP 2 and the BP 3. Each time BP switching is required, reference can be made only to the grouping. When the UE is switched from the BP 1 to the BP 2, the RF center frequency location needs to be tuned; and when the UE is switched from the BP2 to the BP3, the RF center frequency location does not need to be tuned.

Optionally, the method 300 may further include: S360. The user equipment receives indication information sent by the network device, and correspondingly, the network device sends the indication information to the user equipment. The indication information is used to instruct the user equipment to be switched from the first BP to the second BP, and the indication information includes an identifier of the second BP and a working effect moment of the second BP. Alternatively, the indication information is used to instruct the user equipment to be switched from the first BP to the third BP, and the indication information includes an identifier of the third BP and a working effect moment of the third BP.

Optionally, the method 300 may further include: S370. The user equipment is switched between BPs.

Specifically, for example, in FIG. 4, when the BP on which the UE currently works is the BP 1, and the UE needs to be switched to the BP 2, because the BP 1 and the BP 2 belong to the BP group 1, RF retuning is not required when the UE is switched from the BP 1 to the BP 2, and only some baseband tuning preparation time is required. Therefore, a guard interval (gap) that is required when the UE is switched from the BP 1 to the BP 2 may be very small and approximately equal to 0 symbols.

When the indication information instructs the UE to be switched from the BP 1 on which the UE currently works to the BP 3, because the BP 1 belongs to the BP group 1 and the BP 3 belongs to the BP group 2, RF retuning is required when the UE is switched from the BP1 to the BP3. In this case, a guard interval that is required when the UE is switched from the BP 1 to the BP 3 may be set to the time that is required for RF retuning in the type 2 and that is reported by the UE (as described above, the time may be an absolute time length, or may be a quantity of symbols corresponding to an absolute time length in a numerology). Data is not transmitted in the guard interval before the BP 3 takes effect. This may be ensured by scheduling a start time or an end time of a PDSCH/PUSCH, or may be ensured by defining behavior, for example, PDSCH/PUSCH puncturing or rate matching (rate matching), of the UE in the guard interval according to the protocol.

When the indication information instructs the UE to be switched from the BP 1 on which the UE currently works to a BP in another CC, if the another CC and a CC at which the UE currently works are inter-band CCs, a guard interval for switching from the BP 1 to such BP may be set to the time that is required for RF retuning in the type 3 and that is reported by the UE. This is not limited in embodiments of this application.

Correspondingly, because the network device has the RF retuning capability information and the BP group information that are reported by the UE, the network device may set a proper guard interval for the UE for BP switching. For example, the guard interval is 0 symbols, the time that is required for RF retuning in the type 2 and that is reported by the UE, or the time that is required for RF retuning in the type 3 and that is reported by the UE.

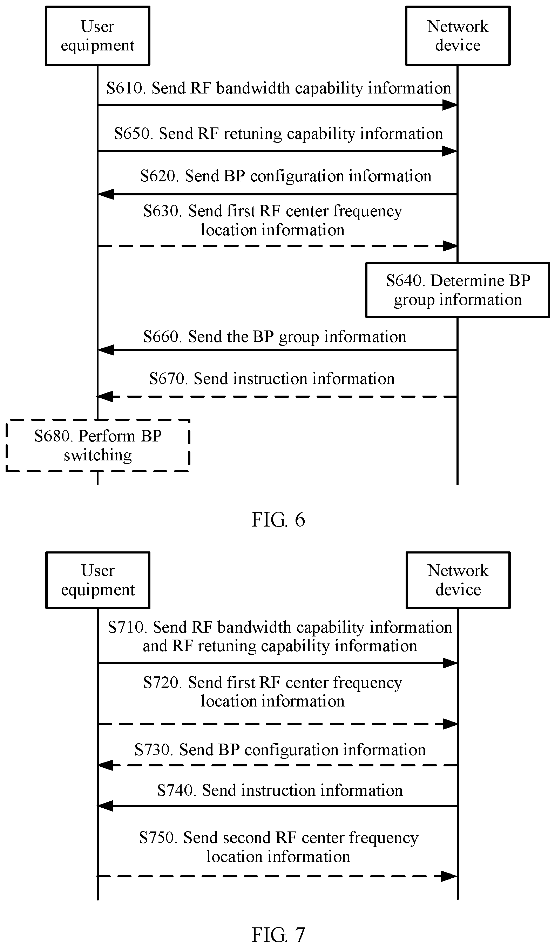

An embodiment of this application provides another communication method. FIG 6 is a schematic flowchart of a communication method 600 according to an embodiment of this application. The method 600 may include the following steps.

S610. User equipment sends RF bandwidth capability information to a network device, and correspondingly, the network device receives the radio frequency RF bandwidth capability information sent by the user equipment. The user equipment may currently work on a first BP.

S620. The user equipment receives BP configuration information sent by the network device, and correspondingly, the network device sends the BP configuration information to the user equipment.

S630. The user equipment sends first RF center frequency location information to the network device, and correspondingly, the network device receives the first RF center frequency location information sent by the user equipment. The first RF center frequency location information is used to indicate an RF center frequency location (namely, a center frequency location of an active RF) at which the user equipment currently works.

S630 and S610 may be simultaneously performed, or the RF bandwidth capability information and the first RF center frequency location information are carried in one piece of signaling for simultaneous sending. Certainly, the RF bandwidth capability information and the first RF center frequency location information may be separately sent. This is not limited in embodiments of this application.

It should be understood that S630 is an optional step, that is, the user equipment may not report the center frequency location of the active RF to the network device. Specifically, in a process before the method 600, the network device may pre-negotiate with the UE to configure a possible RF center frequency location of the UE. For example, as shown in FIG 4, the network device and the UE preconfigure BP groups and an RF center frequency location. If a BP on which the UE currently works is a BP (a BP 1 or a BP 2) in a BP group 1, the RF center frequency location of the UE is correspondingly an RF center frequency location on the left shown in FIG 4. If a BP on which the UE currently works is a BP (a BP 3 or a BP 4) in a BP group 2, the RF center frequency location of the UE is correspondingly an RF center frequency location on the right shown in FIG 4. Therefore, the user equipment does not need to perform S630.

S640. The network device determines BP group information, where the BP group information is used to indicate at least one BP group, one of the at least one BP group includes at least one BP, the at least one BP group includes a first BP group, the first BP group includes a first BP, and when the first BP group further includes a second BP, a guard interval of RF retuning that is required when the user equipment is switched from the first BP to the second BP is less than a preset threshold.

It should be understood that, that the BP group information is used to indicate at least one BP group and one of the at least one BP group includes at least one BP means that the BP group information is used to indicate the at least one BP group and a BP included in each of the at least one BP group. In other words, each of the at least one BP group includes at least one BP.

It should be further understood that, similar to the foregoing description, a combined bandwidth of BPs in each BP group is less than or equal to a maximum bandwidth.

The network device determines BP group information includes: The network device determines the BP group information based on the RF bandwidth capability information, the BP configuration information, and the first RF center frequency location information. A principle of BP group division by the network device may include: determining, based on a first RF center frequency location at which the UE currently works, a size and a location of the BP on which the UE currently works, and a size and a location of another available BP of the UE, a BP to which the UE may be directly switched without tuning the RF center frequency location; and placing the BP and the BP on which the UE currently works in one BP group. Each time inter-BP-group BP switching is performed, the processes in S630 and S640 are repeatedly performed. Alternatively, the network device groups all available BPs of the network device. Each time BP switching is required, reference can be made only to the grouping.

It should be understood that the BP group information and the BP configuration information may be in same signaling, to be sent to the UE together by the network device.

S650. The user equipment sends RF retuning (retuning) capability information to the network device, and correspondingly, the network device receives the RF retuning (retuning) capability information sent by the user equipment. S650 and S610 and/or S630 may be simultaneously performed, or the RF bandwidth capability information, the RF retuning capability information, and the first RF center frequency location information are carried in one piece of signaling for simultaneous sending. The RF bandwidth capability information and the RF retuning capability information usually may be sent in an initial stage when the UE establishes a connection to the network device. Certainly, the RF bandwidth capability information, the RF retuning capability information, and the first RF center frequency location information may be separately sent. This is not limited in embodiments of this application.

S660. The user equipment receives the BP group information sent by the network device (in other words, the user equipment determines the BP group information), and correspondingly, the network device sends the BP group information to the user equipment.

Optionally, the method 600 may further include: S670. The user equipment receives indication information sent by the network device, and correspondingly, the network device sends the indication information to the user equipment.

Optionally, the method 600 may further include: S680. The user equipment is switched between BPs.

Details of each step in the method 600 are similar to that of a corresponding step in the method 300, and are not described herein again.

According to the communication method in embodiments of this application, the user equipment or the network device determines the BP group information. When the user equipment is switched between BPs that belong to a same BP group, the UE does not need to perform RF retuning, and a guard interval during switching may be 0 correspondingly. However, when the UE is switched between BPs in BP groups, a guard interval is not 0. Therefore, the network device is possibly prevented from allocating an excessively long guard interval to the UE for BP switching, and a waste of time domain resources is possibly avoided.

An embodiment of this application provides another communication method. FIG 7 is a schematic flowchart of a communication method 700 according to an embodiment of this application. The method 700 may include the following steps.

S710. User equipment sends radio frequency RF bandwidth capability information and RF retuning (retuning) capability information to a network device, and correspondingly, the network device receives the radio frequency RF bandwidth capability information and the RF retuning (retuning) capability information that are sent by the user equipment. The RF bandwidth capability information is used to indicate a maximum bandwidth supported by at least one RF module of the user equipment. The RF retuning capability information is used to indicate a time required by the user equipment to retune an RF center frequency location. The RF retuning capability information includes information about a first guard interval and information about a second guard interval. The first guard interval is a time required by the user equipment to perform intra-band retuning on the RF center frequency location, and the second guard interval is a time required by the user equipment to perform inter-band retuning on the RF center frequency location. The user equipment may currently work on a first BP.

It should be understood that, in embodiments of this application, for the RF retuning capability information, RF retuning capabilities related to the type 1 to the type 3 may be sent together. Certainly, the RF retuning capabilities related to the type 1 to the type 3 may be separately sent. This is not limited in mbodiments of this application.

It should be further understood that, a target guard interval indicated by the following indication information may be an absolute time length, for example, 20 µs. In this case, the network device or the user equipment calculates, based on numerologies corresponding to the first BP and the second BP, a quantity of symbols corresponding to the absolute time length in the numerologies. For example, in a 30 kHz subcarrier spacing, 20 µs may correspond to one symbol in a normal CP. The target guard interval indicated by the indication information may alternatively be a quantity of symbols in a predefined reference numerology. For example, in a 60 kHz subcarrier spacing, the target guard interval may be two symbols in a normal CP. In this case, the network device or the user equipment calculates, based on the predefined reference numerology, a quantity of symbols corresponding to the quantity of symbols in the numerology. For example, in a 30 kHz subcarrier spacing, the two symbols may correspond to one symbol in the normal CP.

Optionally, S720 may be performed: The user equipment sends first RF center frequency location information to the network device, where the first RF center frequency location information is used to indicate a first RF center frequency location at which the user equipment currently works.

Optionally, the first RF center frequency location may be one of at least one preset RF center frequency location at which the user equipment can work. In this case, the user equipment may unnecessarily send RF center frequency location information to the network device anymore, so that signaling overheads in interaction can be reduced. In a specific implementation, the RF center frequency location of the UE may be a center frequency location of an SS block in a CC or a center frequency location of remaining minimum system information (Remaining Minimum System Information, RMSI). Certainly, the RF center frequency location is not limited to the two special locations, and may be another preset location that is known to both the network device and the UE. This is not limited in embodiments of this application.

Optionally, S730 may be performed: The user equipment receives BP configuration information sent by the network device, and correspondingly, the network device sends the BP configuration information to the user equipment. The BP configuration information includes information that is used to indicate a size and a location of a BP in a CC.

S740. The user equipment receives the indication information sent by the network device, and correspondingly, the network device sends the indication information to the user equipment. The indication information is used to instruct the user equipment to be switched from the first BP to the second BP, the indication information includes an identifier of the second BP, a working effect moment of the second BP, and the target guard interval that is required when the user equipment is switched from the first BP to the second BP, and the target guard interval is equal to the first guard interval or is equal to the second guard interval.

It should be understood that when the RF retuning capability information includes information about the RF retuning capabilities related to the type 1 to the type 3, the target guard interval may be equal to one of three values of the RF retuning capabilities reported by the UE.

Optionally, the target guard interval may be determined by the network device based on the RF bandwidth capability information, the first RF center frequency location, the RF retuning (retuning) capability information, and the BP configuration information, and the BP configuration information includes information that is used to indicate sizes and locations of the first BP and the second BP in the component carrier CC. Specifically, the network device determines a BP to which the UE is to be switched (for example, the UE may be switched to the second BP). The network device determines, based on the RF bandwidth capability information and the first RF center frequency location, a size and a location of an RF at which the UE currently works. The network device determines the target guard interval by comparing the size and the location of the second BP with the size and the location of the RF and based on an RF retuning capability of the UE, whether the network device expects the UE to perform RF retuning, and the like. Alternatively, the network device may determine the target guard interval by referring to other information. The target guard interval may be equal to the first guard interval or the second guard interval in the RF retuning capability information, or may not be strictly equal to (for example, greater than) the first guard interval or the second guard interval. The first guard interval or the second guard interval is merely a reference for determining a value of the target guard interval. This is not limited in embodiments of this application.

It should be understood that when the RF retuning capability information includes the information about the RF retuning capabilities related to the type 1 to the type 3, the target guard interval may be equal to one of the three values of the RF retuning capabilities reported by the UE, or may not be strictly equal to (for example, greater than) one of the three values. One of the three values is merely a reference for determining a value of the target guard interval. This is not limited in embodiments of this application.

As shown in FIG 1, in embodiments of this application, when the first BP is the BP 1, the second BP is the BP 2, a combined bandwidth of the first BP and the second BP is 100M and is equal to a 100M maximum bandwidth supported by the UE, and the network device does not expect the UE to perform RF retuning, the network device may set the target guard interval according to the option 1, that is, may set the target guard interval to 0 symbols or fewer symbols. On the contrary, if the network device expects the UE to perform RF retuning, the network device may set the target guard interval according to the option 2, that is, may set the target guard interval to be equal to the first guard interval or may set the target guard interval based on at least the first guard interval.

In an embodiment of this application, an RF center frequency location after BP switching may be actively determined by the UE. Optionally, the method 700 may further include: S750. The user equipment sends second RF center frequency location information to the network device, where the second RF center frequency location information is used to indicate a second RF center frequency location at which the user equipment works after the user equipment is switched to the second BP.

Specifically, the user equipment may select the second RF center frequency location according to a predetermined rule or a protocol. A basic condition that needs to be met is as follows: After BP switching is performed and the RF center frequency location is tuned, an RF bandwidth can cover the second BP. Optionally, the second RF center frequency location is a center frequency location of the second BP.

Optionally, in this embodiment, the indication information may be carried in downlink control information (Downlink Control Information, DCI), radio resource control (Radio Resource Control, RRC) signaling, or a media access control (Media Access Control, MAC) control element (Control Element, CE), or is carried in other dedicated signaling. This is not limited in embodiments of this application.

In another embodiment of this application, an RF center frequency location after BP switching may be actively determined by the network device. Optionally, the indication information may further include information that is used to indicate the second RF center frequency location, and the information that is used to indicate the second RF center frequency location is used to instruct the user equipment to switch the RF center frequency location to the second RF center frequency location when the user equipment is switched to the second BP for working.

Optionally, in this embodiment, the indication information may be preferably carried in a media access control (Media Access Control, MAC) control element (Control Element, CE). Certainly, the indication information may be carried in other dedicated signaling. This is not limited in embodiments of this application.

It should be understood that in addition to the method 700, in the method 300 and the method 600, the RF center frequency location after BP switching may be actively determined by the UE, or may be actively determined by the network device. In addition, there may be similar steps or operations in the method 300 and the method 600 to the method 700, and details are not described herein again.

It should be understood that in each embodiment of this application, all information that is sent by the user equipment to the network device, for example, the RF bandwidth capability information, the RF retuning capability information, RF center frequency location information (the first RF center frequency location information and the second RF center frequency location information), and BP group information, may be carried in DCI, RRC signaling, or MAC CE signaling, or may be carried in dedicated signaling. This is not limited in embodiments of this application. All information that is sent by the network device to the user equipment, for example, the BP configuration information, BP group information, and the indication information, may be carried in DCI, RRC signaling, or a MAC CE, or may be carried in dedicated signaling. This is not limited in embodiments of this application.

According to the communication method in embodiments of this application, the network device sends, to the user equipment based on the RF bandwidth capability information and the RF retuning capability information of the user equipment, the indication information that is used to indicate the target guard interval that is required when the user equipment is switched between the BPs, so that the network device is possibly prevented from allocating an excessively long guard interval to the UE for BP switching, and a waste of time domain resources is possibly avoided.

The foregoing describes the BP switching method provided in the embodiments of this application. The following describes the user equipment and the network device that are provided in the embodiments of this application.

FIG 8 is a schematic block diagram of user equipment 800 according to an embodiment of this application. As shown in FIG 8, the user equipment 800 may include:
a sending module 810, configured to send radio frequency RF bandwidth capability information to a network device, where the RF bandwidth capability information is used to indicate a maximum bandwidth supported by at least one RF module of the user equipment 800;
a receiving module 820, configured to receive BP configuration information sent by the network device, where the BP configuration information includes information that is used to indicate a size and a location of a BP in a component carrier CC; and
a processing module 830, configured to determine BP group information, where the BP group information is used to indicate at least one BP group, one of the at least one BP group includes at least one BP, the at least one BP group includes a first BP group, the first BP group includes a first BP, and when the first BP group further includes a second BP, a guard interval of RF retuning (retuning) that is required when the user equipment 800 is switched from the first BP to the second BP is 0 symbols.

In embodiments of this application, the user equipment determines the BP group information. When the user equipment is switched between BPs that belong to a same BP group, the UE does not need to perform RF retuning, and a guard interval during switching may be 0 correspondingly, so that the network device is possibly prevented from allocating an excessively long guard interval to the UE for BP switching, and a waste of time domain resources is possibly avoided.

It should be understood that a combined bandwidth of BPs in each BP group may be less than or equal to the maximum bandwidth. The combined bandwidth of the BPs in the BP group is a bandwidth jointly spanned by all BPs in the BP group. In other words, the combined bandwidth of the BPs in the BP group is a maximum value of a frequency domain span of any two BPs in the BP group.

Optionally, in an optional embodiment, the at least one BP group further includes a second BP group, and when the second BP group includes a third BP, a guard interval of RF retuning that is required when the user equipment 800 is switched from the first BP to the third BP is greater than 0 symbols.

Optionally, in an optional embodiment, the sending module 810 is further configured to send RF retuning capability information to the network device, where the RF retuning capability information is used to indicate a time required by the user equipment to retune an RF center frequency location.

Optionally, in an optional embodiment, the processing module 830 is specifically configured to determine the BP group information based on the RF bandwidth capability information, the BP configuration information, and an RF center frequency location at which the user equipment currently works.

Optionally, in an optional embodiment, the sending module 810 is further configured to send the BP group information to the network device.

Optionally, in an optional embodiment, the sending module 810 is further configured to send first RF center frequency location information to the network device, where the first RF center frequency location information is used to indicate an RF center frequency location at which the user equipment currently works; and that the processing module 830 determines BP group information includes: receiving, by using the receiving module 820, the BP group information sent by the network device.

Optionally, in an optional embodiment, the receiving module 820 is further configured to receive indication information sent by the network device, where the indication information is used to instruct the user equipment to be switched from the first BP to the second BP, and the indication information includes an identifier of the second BP and a working effect moment of the second BP.

It should be understood that in embodiments of this application, the sending module 810 may be implemented by a transmitter or a transmitter-related circuit component, some functions of the receiving module 820 may be implemented by a receiver or a receiver-related circuit component, and the processing module 830 may be implemented by a processor or a processor-related circuit component.

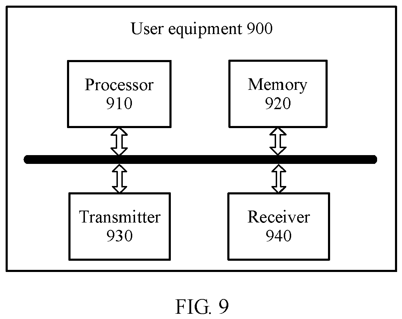

As shown in FIG 9, an embodiment of this application further provides user equipment 900. The user equipment 900 includes a processor 910, a memory 920, a transmitter 930, and a receiver 940. The memory 920 is configured to store an instruction, and the processor 910, the transmitter 930, and the receiver 940 are configured to execute the instruction stored in the memory 920.

The components in the user equipment 900 may communicate with each other by using an internal connection path, to transmit a control signal and/or a data signal.

When the processor 910, the transmitter 930, and the receiver 940 in the user equipment 900 execute the instruction stored in the memory 920, the user equipment is enabled to:
send radio frequency RF bandwidth capability information to a network device, where the RF bandwidth capability information is used to indicate a maximum bandwidth supported by at least one RF module of the user equipment, and the user equipment currently works on a first BP;
receive BP configuration information sent by the network device, where the BP configuration information includes information that is used to indicate a size and a location of a BP in a component carrier CC; and
determine BP group information, where the BP group information is used to indicate at least one BP group, one of the at least one BP group includes at least one BP, the at least one BP group includes a first BP group, the first BP group includes a first BP, and when the first BP group further includes a second BP, a guard interval of RF retuning (retuning) that is required when the user equipment is switched from the first BP to the second BP is 0 symbols.

It should be understood that the user equipment 800 shown in FIG 8 or the user equipment 900 shown in FIG 9 may be configured to perform an operation or a procedure related to the user equipment in the foregoing method embodiment, and an operation and/or a function of each module in the user equipment 800 or the user equipment 900 are/is separately used to implement a corresponding procedure in the foregoing method embodiment. For brevity, details are not described herein.

An embodiment of this application further provides a computer-readable storage medium. The computer-readable storage medium stores an instruction. When the instruction runs on a computer, the computer is enabled to perform the BP switching method in the foregoing method embodiment.

An embodiment of this application further provides a computer program product including an instruction, and when a computer runs the instruction of the computer program product, the computer performs the BP switching method in the foregoing method embodiment.

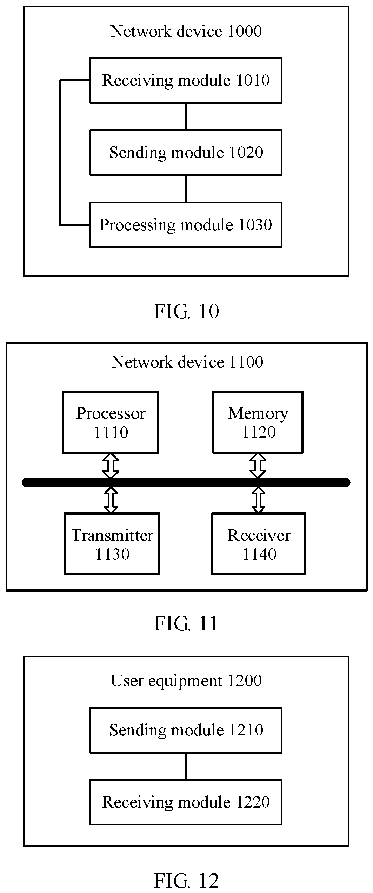

FIG 10 is a schematic block diagram of a network device 1000 according to an embodiment of this application. As shown in FIG 10, the network device 1000 may include:
a receiving module 1010, configured to receive radio frequency RF bandwidth capability information sent by user equipment, where the RF bandwidth capability information is used to indicate a maximum bandwidth supported by at least one RF module of the user equipment;
a sending module 1020, configured to send BP configuration information to the user equipment, where the BP configuration information includes information that is used to indicate a size and a location of a BP in a component carrier CC; and
a processing module 1030, configured to determine BP group information, where the BP group information is used to indicate at least one BP group, one of the at least one BP group includes at least one BP, the at least one BP group includes a first BP group, the first BP group includes a first BP, and when the first BP group further includes a second BP, a guard interval of RF retuning (retuning) that is required when the user equipment is switched from the first BP to the second BP is 0 symbols.

In embodiments of this application, the network device determines the BP group information. Therefore, when the user equipment is switched between BPs that belong to a same BP group, the UE does not need to perform RF retuning, and a guard interval during switching may be 0 correspondingly, so that the network device is possibly prevented from allocating an excessively long guard interval to the UE for BP switching, and a waste of time domain resources is possibly avoided.

It should be understood that a combined bandwidth of BPs in each BP group may be less than or equal to the maximum bandwidth. The combined bandwidth of the BPs in the BP group is a bandwidth jointly spanned by all BPs in the BP group. In other words, the combined bandwidth of the BPs in the BP group is a maximum value of a frequency domain span of any two BPs in the BP group.

Optionally, in an optional embodiment, the at least one BP group further includes a second BP group, and when the second BP group includes a third BP, a guard interval of RF retuning that is required when the user equipment is switched from the first BP to the third BP is greater than 0 symbols.

Optionally, in an optional embodiment, the receiving module 1010 is further configured to receive RF retuning (retuning) capability information sent by the user equipment, where the RF retuning capability information is used to indicate a time required by the user equipment to retune an RF center frequency location.

Optionally, in an optional embodiment, that the processing module 1030 determines BP group information includes: receiving, by using the receiving module 1010, the BP group information sent by the user equipment.

Optionally, in an optional embodiment, the receiving module 1010 is further configured to: before the processing module determines the BP group information, receive first RF center frequency location information sent by the user equipment, where the first RF center frequency location information is used to indicate an RF center frequency location at which the user equipment currently works; and the sending module 1020 is further configured to send the BP group information to the user equipment.

Optionally, in an optional embodiment, the processing module 1030 is specifically configured to determine the BP group information based on the RF bandwidth capability information, the BP configuration information, and the first RF center frequency location information.

Optionally, in an optional embodiment, the sending module 1020 is further configured to send indication information to the user equipment, where the indication information is used to instruct the user equipment to be switched from the first BP to the second BP, and the indication information includes an identifier of the second BP and a working effect moment of the second BP.

It should be understood that in embodiments of this application, the sending module 1020 may be implemented by a transmitter or a transmitter-related circuit component, some functions of the receiving module 1010 may be implemented by a receiver or a receiver-related circuit component, and the processing module 1030 may be implemented by a processor or a processor-related circuit component.

As shown in FIG 11, an embodiment of this application further provides a network device 1100. The network device 1100 includes a processor 1110, a memory 1120, a transmitter 1130, and a receiver 1140. The memory 1120 is configured to store an instruction, and the processor 1110, the transmitter 1130, and the receiver 1140 are configured to execute the instruction stored in the memory 1120.

The components in the network device 1100 may communicate with each other by using an internal connection path, to transmit a control signal and/or a data signal.

When the processor 1110, the transmitter 1130, and the receiver 1140 in the network device 1100 execute the instruction stored in the memory 1120, the network device is enabled to:
receive radio frequency RF bandwidth capability information sent by user equipment, where the RF bandwidth capability information is used to indicate a maximum bandwidth supported by at least one RF module of the user equipment, and the user equipment currently works on a first BP;
send BP configuration information to the user equipment, where the BP configuration information includes information that is used to indicate a size and a location of a BP in a component carrier CC; and
determine BP group information, where the BP group information is used to indicate at least one BP group, one of the at least one BP group includes at least one BP, the at least one BP group includes a first BP group, the first BP group includes a first BP, and when the first BP group further includes a second BP, a guard interval of RF retuning (retuning) that is required when the user equipment is switched from the first BP to the second BP is 0 symbols.

It should be understood that the network device 1000 shown in FIG 10 or the network device 1100 shown in FIG 11 may be configured to perform an operation or a procedure related to the network device in the foregoing method embodiment, and an operation and/or a function of each module in the network device 1000 or the network device 1100 are/is separately used to implement a corresponding procedure in the foregoing method embodiment. For brevity, details are not described herein.

An embodiment of this application further provides a computer-readable storage medium. The computer-readable storage medium stores an instruction. When the instruction runs on a computer, the computer is enabled to perform the BP switching method in the foregoing method embodiment.

An embodiment of this application further provides a computer program product including an instruction, and when a computer runs the instruction of the computer program product, the computer performs the BP switching method in the foregoing method embodiment.

FIG 12 is a schematic block diagram of user equipment 1200 according to an embodiment of this application. As shown in FIG 12, the user equipment 1200 may include:
a sending module 1210, configured to send radio frequency RF bandwidth capability information and RF retuning (retuning) capability information to a network device, where the RF bandwidth capability information is used to indicate a maximum bandwidth supported by at least one RF module of the user equipment, the RF retuning capability information is used to indicate a time required by the user equipment to retune an RF center frequency location, the RF retuning capability information includes information about a first guard interval and information about a second guard interval, the first guard interval is a time required by the user equipment to perform intra-band retuning on the RF center frequency location, the second guard interval is a time required by the user equipment to perform inter-band retuning on the RF center frequency location, and the user equipment currently works on a first BP; and
a receiving module 1220, configured to receive indication information sent by the network device, where the indication information is used to instruct the user equipment to be switched from the first BP to a second BP, the indication information includes an identifier of the second BP, a working effect moment of the second BP, and a target guard interval that is required when the user equipment is switched from the first BP to the second BP, and the target guard interval is equal to the first guard interval or is equal to the second guard interval.

In embodiments of this application, the user equipment receives the indication information that is sent by the network device, that is determined based on the RF bandwidth capability information and the RF retuning capability information of the user equipment, and that is used to indicate the target guard interval that is required when the user equipment is switched between the BPs, so that the network device is possibly prevented from allocating an excessively long guard interval to the UE for BP switching, and a waste of time domain resources is possibly avoided.

Optionally, in an optional embodiment, the target guard interval is determined by the network device based on the RF bandwidth capability information, a first RF center frequency location, the RF retuning (retuning) capability information, and BP configuration information, and the BP configuration information includes information that is used to indicate sizes and locations of the first BP and the second BP in a component carrier CC.

Optionally, in an optional embodiment, the sending module 1210 is further configured to send first RF center frequency location information to the network device, where the first RF center frequency location information is used to indicate the first RF center frequency location at which the user equipment currently works.

Optionally, in an optional embodiment, the first RF center frequency location is one of at least one preset RF center frequency location at which the user equipment can work.

Optionally, in an optional embodiment, the sending module 1210 is further configured to send second RF center frequency location information to the network device, where the second RF center frequency location information is used to indicate a second RF center frequency location at which the user equipment works after the user equipment is switched to the second BP.

Optionally, in an optional embodiment, the second RF center frequency location is a center frequency location of the second BP.

Optionally, in an optional embodiment, the indication information further includes information that is used to indicate the second RF center frequency location, and the information that is used to indicate the second RF center frequency location is used to instruct the user equipment to switch the RF center frequency location to the second RF center frequency location when the user equipment is switched to the second BP for working.

It should be understood that in embodiments of this application, the sending module 1210 may be implemented by a transmitter or a transmitter-related circuit component, and some functions of the receiving module 1220 may be implemented by a receiver or a receiver-related circuit component.

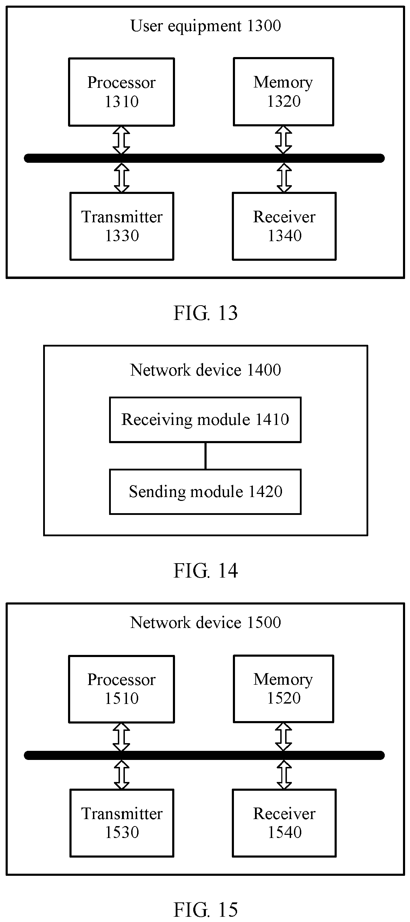

As shown in FIG 13, an embodiment of this application further provides user equipment 1300. The user equipment 1300 includes a processor 1310, a memory 1320, a transmitter 1330, and a receiver 1340. The memory 1320 is configured to store an instruction, and the processor 1310 is configured to control the transmitter 1330 and the receiver 1340 to execute the instruction stored in the memory 1320.

The components in the user equipment 1300 may communicate with each other by using an internal connection path, to transmit a control signal and/or a data signal.

When the processor 1310 in the user equipment 1300 controls the transmitter 1330 and the receiver 1340 to execute the instruction stored in the memory 1320, the user equipment is enabled to:
send radio frequency RF bandwidth capability information and RF retuning (retuning) capability information to a network device, where the RF bandwidth capability information is used to indicate a maximum bandwidth supported by at least one RF module of the user equipment, the RF retuning capability information is used to indicate a time required by the user equipment to retune an RF center frequency location, the RF retuning capability information includes information about a first guard interval and information about a second guard interval, the first guard interval is a time required by the user equipment to perform intra-band retuning on the RF center frequency location, the second guard interval is a time required by the user equipment to perform inter-band retuning on the RF center frequency location, and the user equipment currently works on a first BP; and receive indication information sent by the network device, where the indication information is used to instruct the user equipment to be switched from the first BP to a second BP, the indication information includes an identifier of the second BP, a working effect moment of the second BP, and a target guard interval that is required when the user equipment is switched from the first BP to the second BP, and the target guard interval is equal to the first guard interval or is equal to the second guard interval.

It should be understood that the user equipment 1200 shown in FIG 12 or the user equipment 1300 shown in FIG 13 may be configured to perform an operation or a procedure related to the user equipment in the foregoing method embodiment, and an operation and/or a function of each module in the user equipment 1200 or the user equipment 1300 are/is separately used to implement a corresponding procedure in the foregoing method embodiment. For brevity, details are not described herein.

An embodiment of this application further provides a computer-readable storage medium. The computer-readable storage medium stores an instruction. When the instruction runs on a computer, the computer is enabled to perform the BP switching method in the foregoing method embodiment.

An embodiment of this application further provides a computer program product including an instruction, and when a computer runs the instruction of the computer program product, the computer performs the BP switching method in the foregoing method embodiment.

FIG 14 is a schematic block diagram of a network device 1400 according to an embodiment of this application. As shown in FIG 14, the network device 1400 may include:
a receiving module 1410, configured to receive radio frequency RF bandwidth capability information and RF retuning (retuning) capability information that are sent by user equipment, where the RF bandwidth capability information is used to indicate a maximum bandwidth supported by at least one RF module of the user equipment, the RF retuning capability information is used to indicate a time required by the user equipment to retune an RF center frequency location, the RF retuning capability information includes information about a first guard interval and information about a second guard interval, the first guard interval is a time required by the user equipment to perform intra-band retuning on the RF center frequency location, the second guard interval is a time required by the user equipment to perform inter-band retuning on the RF center frequency location, and the user equipment currently works on a first BP; and
a sending module 1420, configured to send indication information to the user equipment, where the indication information is used to instruct the user equipment to be switched from the first BP to a second BP, the indication information includes an identifier of the second BP, a working effect moment of the second BP, and a target guard interval that is required when the user equipment is switched from the first BP to the second BP, and the target guard interval is equal to the first guard interval or is equal to the second guard interval.

In embodiments of this application, the network device sends, to the user equipment based on the RF bandwidth capability information and the RF retuning capability information of the user equipment, the indication information that is used to indicate the target guard interval that is required when the user equipment is switched between the BPs, so that the network device is possibly prevented from allocating an excessively long guard interval to the UE for BP switching, and a waste of time domain resources is possibly avoided.

Optionally, in an optional embodiment, the target guard interval is determined by the network device based on the RF bandwidth capability information, a first RF center frequency location, the RF retuning (retuning) capability information, and BP configuration information, and the BP configuration information includes information that is used to indicate sizes and locations of the first BP and the second BP in a component carrier CC.

Optionally, in an optional embodiment, the receiving module 1410 is further configured to receive first RF center frequency location information sent by the user equipment, where the first RF center frequency location information is used to indicate the first RF center frequency location at which the user equipment currently works.

Optionally, in an optional embodiment, the first RF center frequency location is one of at least one preset RF center frequency location at which the user equipment can work.

Optionally, in an optional embodiment, the receiving module 1410 is further configured to receive second RF center frequency location information sent by the user equipment, where the second RF center frequency location information is used to indicate a second RF center frequency location at which the user equipment works after the user equipment is switched to the second BP.

Optionally, in an optional embodiment, the second RF center frequency location is a center frequency location of the second BP.

Optionally, in an optional embodiment, the indication information further includes information that is used to indicate the second RF center frequency location, and the information that is used to indicate the second RF center frequency location is used to instruct the user equipment to switch the RF center frequency location to the second RF center frequency location when the user equipment is switched to the second BP for working.

It should be understood that in embodiments of this application, the sending module 1420 may be implemented by a transmitter or a transmitter-related circuit component, and some functions of the receiving module 1410 may be implemented by a receiver or a receiver-related circuit component.

As shown in FIG 15, an embodiment of this application further provides a network device 1500. The network device 1500 includes a processor 1510, a memory 1520, a transmitter 1530, and a receiver 1540. The memory 1520 is configured to store an instruction, and the processor 1510, the transmitter 1530, and the receiver 1540 are configured to execute the instruction stored in the memory 1520.

The components in the network device 1500 may communicate with each other by using an internal connection path, to transmit a control signal and/or a data signal.

When the processor 1510, the transmitter 1530, and the receiver 1540 in the network device 1500 execute the instruction stored in the memory 1520, the network device is enabled to:
receive radio frequency RF bandwidth capability information and RF retuning (retuning) capability information that are sent by user equipment, where the RF bandwidth capability information is used to indicate a maximum bandwidth supported by at least one RF module of the user equipment, the RF retuning capability information is used to indicate a time required by the user equipment to retune an RF center frequency location, the RF retuning capability information includes information about a first guard interval and information about a second guard interval, the first guard interval is a time required by the user equipment to perform intra-band retuning on the RF center frequency location, the second guard interval is a time required by the user equipment to perform inter-band retuning on the RF center frequency location, and the user equipment currently works on a first BP; and
send indication information to the user equipment, where the indication information is used to instruct the user equipment to be switched from the first BP to a second BP, the indication information includes an identifier of the second BP, a working effect moment of the second BP, and a target guard interval that is required when the user equipment is switched from the first BP to the second BP, and the target guard interval is equal to the first guard interval or is equal to the second guard interval.

It should be understood that the network device 1400 shown in FIG 14 or the network device 1500 shown in FIG 15 may be configured to perform an operation or a procedure related to the network device in the foregoing method embodiment, and an operation and/or a function of each module in the network device 1400 or the network device 1500 are/is separately used to implement a corresponding procedure in the foregoing method embodiment. For brevity, details are not described herein.

An embodiment of this application further provides a computer-readable storage medium. The computer-readable storage medium stores an instruction. When the instruction runs on a computer, the computer is enabled to perform the BP switching method in the foregoing method embodiment.

An embodiment of this application further provides a computer program product including an instruction, and when a computer runs the instruction of the computer program product, the computer performs the BP switching method in the foregoing method embodiment.

It should be understood that, the processor mentioned in the embodiments of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA), another programmable logic device, a discrete gate, a transistor logic device, a discrete hardware component, or the like. The general-purpose processor may be a microprocessor, or the processor may be any conventional processor or the like.

It should be further understood that the memory mentioned in the embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. Through example but not limitative description, many forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA, another programmable logic device, a discrete gate, a transistor logic device, or a discrete hardware component, the memory (storage module) is integrated into the processor.

It should be noted that the memory described in this specification is intended to include but not limited to these memories and any other proper types of memories.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, all or some of the procedures or the functions according to the embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a high-density digital video disc (Digital Video Disc, DVD), a semiconductor medium (for example, a solid state drive (Solid State Disk, SSD)), or the like.

It should be understood that "first", "second", and various numbers in this specification are used for differentiation only for ease of description, instead of limiting the scope of this application.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position or may be distributed on a plurality of network units. Some or all of the units may be selected based on actual requirements to achieve the objectives of the solutions of the embodiments.

In addition, the functional units in the embodiments of this application may be integrated into one processing unit, or each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by user equipment (800), radio frequency, RF, bandwidth capability information (S310) to a network device, wherein the RF bandwidth capability information is used to indicate a maximum bandwidth supported by at least one RF module of the user equipment (800);
sending, by the user equipment (800), RF retuning capability information (S340) to the network device, wherein the RF retuning capability information is used to indicate a time required by the user equipment (800) to retune an RF center frequency location;
receiving, by the user equipment (800), bandwidth part, BP, configuration information (S320) from the network device, wherein the BP configuration information comprises information that is used to indicate a size and a location of a BP in a component carrier, CC;determining, by the user equipment (800), a BP group information (S330) based on the RF bandwidth capability information, the BP configuration information, and the RF center frequency location at which the user equipment currently works, wherein the BP group information is used to indicate at least one BP group, one of the at least one BP group comprises at least one BP, the at least one BP group comprises a first BP group, the first BP group comprises a first BP, and when the first BP group further comprises a second BP, a guard interval of RF retuning that is required when the user equipment (800) is switched (S370) from the first BP to the second BP is 0 symbols;
sending (S350), by the user equipment (800), the determined BP group information to the network device;
wherein the user equipment (800) and the network device (1000) set the guard interval based on the BP group information; and
wherein the combined bandwidth of the BPs in the BP group is a bandwidth jointly spanned by all BPs in the BP group and the combined bandwidth of the BP group is less than or equal to the maximum bandwidth.

2. The method according to claim 1, wherein the at least one BP group further comprises a second BP group, and when the second BP group comprises a third BP, a guard interval of RF retuning that is required when the user equipment (800) is switched (S370) from the first BP to the third BP is greater than 0 symbols.

3. The method according to any one of claims 1 to 2, wherein the method further comprises:
sending, by the user equipment (800), first RF center frequency location information to the network device, wherein the first RF center frequency location information is used to indicate the RF center frequency location at which the user equipment currently works; andthe determining, by the user equipment (800), BP group information (S330) comprises:
receiving, by the user equipment (800), the BP group information (S660) from the network device.

4. The method according to any one of claims 1 to 3, wherein the method further comprises:
receiving, by the user equipment (800), indication information (S360) from the network device, wherein the indication information is used to instruct the user equipment (800) to be switched (S370) from the first BP to the second BP, and the indication information comprises an identifier of the second BP and a working effect moment of the second BP.

5. A communication method, comprising:
receiving, by a network device, radio frequency, RF, bandwidth capability information (S610) from user equipment (800), wherein the RF bandwidth capability information is used to indicate a maximum bandwidth supported by at least one RF module of the user equipment (800);
receiving, by the network device, RF retuning capability information (S650) from the user equipment (800), wherein the RF retuning capability information is used to indicate a time required by the user equipment (800) to retune an RF center frequency location;
sending, by the network device, BP configuration information (S620) to the user equipment (800), wherein the BP configuration information comprises information that is used to indicate a size and a location of a BP in a component carrier, CC;
determining, by the network device, BP group information (S640) based on the RF bandwidth capability information, the BP configuration information, and the RF center frequency location at which the user equipment (800) currently works, wherein the BP group information is used to indicate at least one BP group, one of the at least one BP group comprises at least one BP, the at least one BP group comprises a first BP group, the first BP group comprises a first BP, and when the first BP group further comprises a second BP, a guard interval of RF retuning that is required when the user equipment (800) is switched (S680) from the first BP to the second BP is 0 symbols;
sending (S660), by the network device, the determined BP group information to the user equipment (800);
wherein the network device (1000) and the user equipment (800) set the guard interval based on the BP group information; and
wherein the combined bandwidth of the BPs in the BP group is a bandwidth jointly spanned by all BPs in the BP group and the combined bandwidth of the BP group is less than or equal to the maximum bandwidth.

6. The method according to claim 5, wherein the at least one BP group further comprises a second BP group, and when the second BP group comprises a third BP, a guard interval of RF retuning that is required when the user equipment (800) is switched (S370) from the first BP to the third BP is greater than 0 symbols.

7. The method according to any one of claims 5 to 6, wherein before the determining, by the network device, BP group information (S640), the method further comprises: receiving, by the network device, first RF center frequency location information (S630) from the user equipment (800), wherein the first RF center frequency location information is used to indicate the RF center frequency location at which the user equipment (800) currently works; and
the method further comprises: sending, by the network device, the BP group information (S660) to the user equipment (800).

8. The method according to claim 7, wherein the determining, by the network device, BP group information (S640) comprises:
determining, by the network device, the BP group information (S640) based on the RF bandwidth capability information, the BP configuration information, and the first RF center frequency location information.

9. The method according to any one of claims 5 to 8, wherein the method further comprises:
sending, by the network device, indication information (S670) to the user equipment (800), wherein the indication information is used to instruct the user equipment (800) to be switched (S370) from the first BP to the second BP, and the indication information comprises an identifier of the second BP and a working effect moment of the second BP.

10. An apparatus comprising means for implementing the method according to any one of claims 1 to 4.

## Patentansprüche

1. Kommunikationsverfahren, umfassend:
Senden, durch ein Benutzer-Equipment (800), von Hochfrequenz-, HF-, Bandbreitenfähigkeitsinformationen (S310) an eine Netzvorrichtung, wobei die HF-Bandbreitenfähigkeitsinformationen verwendet werden, um eine maximale Bandbreite anzugeben, die von wenigstens einem HF-Modul des Benutzer-Equipments (800) unterstützt wird;
Senden, durch das Benutzer-Equipment (800), von HF-Neuabstimmfähigkeitsinformationen (S340) an die Netzvorrichtung, wobei die HF-Neuabstimmfähigkeitsinformationen verwendet werden, um eine Zeit anzugeben, die das Benutzer-Equipment (800) benötigt, um eine Lage einer HF-Mittenfrequenz neu abzustimmen;
Empfangen, durch das Benutzer-Equipment (800), von Bandbreitenteil, BP ("Bandwidth Part") -Konfigurationsinformationen (S320) von der Netzvorrichtung, wobei die BP-Konfigurationsinformationen Informationen umfassen, die verwendet werden, um eine Größe und eine Lage eines BP in einem Komponententräger, CC ("Component Carrier"), anzugeben;
Bestimmen, durch das Benutzer-Equipment (800), einer BP-Gruppeninformation (S330) basierend auf den HF-Bandbreitenfähigkeitsinformationen, den BP-Konfigurationsinformationen und der Lage der HF-Mittenfrequenz, auf der das Benutzer-Equipment derzeit arbeitet, wobei die BP-Gruppeninformation verwendet wird, um wenigstens eine BP-Gruppe anzugeben, eine der wenigstens einen BP-Gruppe wenigstens einen BP umfasst, die wenigstens eine BP-Gruppe eine erste BP-Gruppe umfasst, die erste BP-Gruppe einen ersten BP umfasst, und, wenn die erste BP-Gruppe ferner einen zweiten BP umfasst, ein Schutzintervall der HF-Neuabstimmung, das erforderlich ist, wenn das Benutzer-Equipment (800) vom ersten BP zum zweiten BP umgeschaltet wird (S370), 0 Symbole beträgt;
Senden (S350), durch das Benutzer-Equipment (800), der bestimmten BP-Gruppeninformation an die Netzvorrichtung;
wobei das Benutzer-Equipment (800) und die Netzvorrichtung (1000) das Schutzintervall basierend auf der BP-Gruppeninformation einstellen; und
wobei die kombinierte Bandbreite der BPs in der BP-Gruppe eine Bandbreite ist, die von allen BPs in der BP-Gruppe gemeinsam überspannt wird, und die kombinierte Bandbreite der BP-Gruppe kleiner oder gleich der maximalen Bandbreite ist.

2. Verfahren gemäß Anspruch 1, wobei die wenigstens eine BP-Gruppe ferner eine zweite BP-Gruppe umfasst, und wenn die zweite BP-Gruppe einen dritten BP umfasst, ein Schutzintervall der HF-Neuabstimmung, das erforderlich ist, wenn das Benutzer-Equipment (800) vom ersten BP zum dritten BP umgeschaltet wird (S370), größer als 0 Symbole ist.

3. Verfahren gemäß einem der Ansprüche 1 bis 2, wobei das Verfahren ferner umfasst: Senden, durch das Benutzer-Equipment (800), erster Informationen zur Lage der HF-Mittenfrequenz an die Netzvorrichtung, wobei die erste Information zur Lage der HF-Mittenfrequenz verwendet wird, um die Lage der HF-Mittenfrequenz anzugeben, mit der das Benutzer-Equipment derzeit arbeitet; und das Bestimmen, durch das Benutzer-Equipment (800), der BP-Gruppeninformation (S330) umfasst:
Empfangen, durch das Benutzer-Equipment (800), der BP-Gruppeninformation (S660) von der Netzvorrichtung.

4. Verfahren gemäß einem der Ansprüche 1 bis 3, wobei das Verfahren ferner umfasst: Empfangen, durch das Benutzer-Equipment (800), von Anzeigeinformationen (S360) von der Netzvorrichtung, wobei die Anzeigeinformationen verwendet werden, um anzuweisen, dass das Benutzer-Equipment (800) vom ersten BP auf den zweiten BP umgeschaltet wird (S370), und die Anzeigeinformationen einen Kennzeichner des zweiten BP und einen Arbeitsaufnahmezeitpunkt des zweiten BP umfassen.

5. Kommunikationsverfahren, umfassend:
Empfangen, durch eine Netzvorrichtung, von Hochfrequenz-, HF-, Bandbreitenfähigkeitsinformationen (S610) vom Benutzer-Equipment (800), wobei die HF-Bandbreitenfähigkeitsinformationen verwendet werden, um eine maximale Bandbreite anzugeben, die von wenigstens einem HF-Modul des Benutzer-Equipments (800) unterstützt wird;
Empfangen, durch die Netzvorrichtung, von HF-Neuabstimmfähigkeitsinformationen (S650) vom Benutzer-Equipment (800), wobei die HF-Neuabstimmfähigkeitsinformationen verwendet werden, um eine Zeit anzugeben, die das Benutzer-Equipment (800) benötigt, um eine Lage einer HF-Mittenfrequenz neu abzustimmen;
Senden, durch die Netzvorrichtung, von BP-Konfigurationsinformationen (S620) an das Benutzer-Equipment (800), wobei die BP-Konfigurationsinformationen Informationen umfassen, die verwendet werden, um eine Größe und eine Lage eines BP in einem Komponententräger, CC ("Component Carrier"), anzugeben;
Bestimmen, durch die Netzvorrichtung, einer BP-Gruppeninformation (S640) basierend auf den HF-Bandbreitenfähigkeitsinformationen, den BP-Konfigurationsinformationen und der Lage der HF-Mittenfrequenz, auf der das Benutzer-Equipment (800) derzeit arbeitet, wobei die BP-Gruppeninformation verwendet wird, um wenigstens eine BP-Gruppe anzugeben, eine der wenigstens einen BP-Gruppe wenigstens einen BP umfasst, die wenigstens eine BP-Gruppe eine erste BP-Gruppe umfasst, die erste BP-Gruppe einen ersten BP umfasst, und, wenn die erste BP-Gruppe ferner einen zweiten BP umfasst, ein Schutzintervall der HF-Neuabstimmung, das erforderlich ist, wenn das Benutzer-Equipment (800) vom ersten BP zum zweiten BP umgeschaltet wird (S680), 0 Symbole beträgt;
Senden (S660), durch die Netzvorrichtung, der bestimmten BP-Gruppeninformation an das Benutzer-Equipment (800);
wobei die Netzvorrichtung (1000) und das Benutzer-Equipment (800) das Schutzintervall basierend auf der BP-Gruppeninformation einstellen; und
wobei die kombinierte Bandbreite der BPs in der BP-Gruppe eine Bandbreite ist, die von allen BPs in der BP-Gruppe gemeinsam überspannt wird, und die kombinierte Bandbreite der BP-Gruppe kleiner oder gleich der maximalen Bandbreite ist.

6. Verfahren gemäß Anspruch 5, wobei die wenigstens eine BP-Gruppe ferner eine zweite BP-Gruppe umfasst, und wenn die zweite BP-Gruppe einen dritten BP umfasst, ein Schutzintervall der HF-Neuabstimmung, das erforderlich ist, wenn das Benutzer-Equipment (800) vom ersten BP zum dritten BP umgeschaltet wird (S370), größer als 0 Symbole ist.

7. Verfahren gemäß einem der Ansprüche 5 bis 6, wobei das Verfahren vor dem Bestimmen, durch die Netzvorrichtung, der BP-Gruppeninformation (S640) ferner umfasst: Empfangen, durch die Netzvorrichtung, erster Informationen zur Lage der HF-Mittenfrequenz (S630) vom Benutzer-Equipment (800), wobei die erste Information zur Lage der HF-Mittenfrequenz verwendet wird, um die Lage der HF-Mittenfrequenz anzugeben, mit der das Benutzer-Equipment (800) derzeit arbeitet; und
wobei das Verfahren ferner umfasst: Senden, durch die Netzvorrichtung, der BP-Gruppeninformation (S660) an das Benutzer-Equipment (800).

8. Verfahren gemäß Anspruch 7, wobei das Bestimmen, durch die Netzvorrichtung, der BP-Gruppeninformation (S640) umfasst:
Bestimmen, durch die Netzvorrichtung, der BP-Gruppeninformation (S640) basierend auf den HF-Bandbreitenfähigkeitsinformationen, den BP-Konfigurationsinformationen und der ersten Information zur Lage der HF-Mittenfrequenz.

9. Verfahren gemäß einem der Ansprüche 5 bis 8, wobei das Verfahren ferner umfasst:
Senden, durch die Netzvorrichtung, von Anzeigeinformationen (S670) an das Benutzer-Equipment (800), wobei die Anzeigeinformationen verwendet werden, um anzuweisen, dass das Benutzer-Equipment (800) vom ersten BP auf den zweiten BP umgeschaltet wird (S370), und die Anzeigeinformationen einen Kennzeichner des zweiten BP und einen Arbeitsaufnahmezeitpunkt des zweiten BP umfassen.

10. Einrichtung, die Mittel zum Implementieren des Verfahrens gemäß einem der Ansprüche 1 bis 4 umfasst.

## Revendications

1. Procédé de communication, comprenant :
l'envoi, par un équipement utilisateur (800), d'informations de capacité de bande passante de radiofréquence, RF (S310), à un dispositif de réseau, les informations de capacité de bande passante RF étant utilisées pour indiquer une bande passante maximale prise en charge par au moins un module RF de l'équipement utilisateur (800),
l'envoi, par l'équipement utilisateur (800), d'informations de capacité de resyntonisation RF (S340) au dispositif de réseau, les informations de capacité de resyntonisation RF étant utilisées pour indiquer un temps requis par l'équipement utilisateur (800) pour resyntoniser un emplacement de fréquence centrale RF ;
la réception, par l'équipement utilisateur (800), d'informations de configuration de partie de bande passante, BP (S320), en provenance du dispositif de réseau, les informations de configuration de BP comprenant des informations qui sont utilisées pour indiquer une taille et un emplacement d'une BP dans une porteuse de composante, CC ;
la détermination, par l'équipement utilisateur (800), d'informations de groupe de BP (S330) sur la base des informations de capacité de bande passante RF, des informations de configuration de BP, et de l'emplacement de fréquence centrale RF auquel l'équipement utilisateur travaille actuellement, les informations de groupe de BP étant utilisées pour indiquer au moins un groupe de BP, l'un des au moins un groupe de BP comprenant au moins une BP, l'au moins un groupe de BP comprenant un premier groupe de BP, le premier groupe de BP comprenant une première BP, et lorsque le premier groupe de BP comprend en outre une deuxième BP, un intervalle de garde de resyntonisation RF qui est requis lorsque l'équipement utilisateur (800) est commuté (S370) de la première BP à la deuxième BP étant 0 symbole ;
l'envoi (S350), par l' équipement utilisateur (800), des informations de groupe de BP déterminées au dispositif de réseau ;
l'équipement utilisateur (800) et le dispositif de réseau (1000) définissant l'intervalle de garde sur la base des informations de groupe de BP ; et
la bande passante combinée des BP dans le groupe de BP étant une bande passante couverte conjointement par toutes les BP dans le groupe de BP et la bande passante combinée du groupe de BP étant inférieure ou égale à la bande passante maximale.

2. Procédé selon la revendication 1, l'au moins un groupe de BP comprenant en outre un deuxième groupe de BP, et lorsque le deuxième groupe de BP comprend une troisième BP, un intervalle de garde de resyntonisation RF qui est requis lorsque l'équipement utilisateur (800) est commuté (S370) de la première BP à la troisième BP étant supérieur à 0 symbole.

3. Procédé selon l'une quelconque des revendications 1 à 2, le procédé comprenant en outre :
l'envoi, par l'équipement utilisateur (800), de premières informations de localisation de fréquence centrale RF au dispositif de réseau, les premières informations de localisation de fréquence centrale RF étant utilisées pour indiquer la localisation de fréquence centrale RF à laquelle l'équipement utilisateur fonctionne actuellement ; et la détermination, par l'équipement utilisateur (800), d'informations de groupe de BP (S330) comprenant :
la réception, par l'équipement utilisateur (800), des informations de groupe de BP (S660) en provenance du dispositif de réseau.

4. Procédé selon l'une quelconque des revendications 1 à 3, le procédé comprenant en outre :
la réception, par l'équipement utilisateur (800), d'informations d'indication (S360) en provenance du dispositif de réseau, les informations d'indication étant utilisées pour ordonner à l'équipement utilisateur (800) d'être commuté (S370) de la première BP à la deuxième BP, et les informations d'indication comprenant un identifiant de la deuxième BP et un moment d'effet de travail de la deuxième BP.

5. Procédé de communication, comprenant :
la réception, par un dispositif de réseau, d'informations de capacité de bande passante de radiofréquence, RF (S610), en provenance d'un équipement utilisateur (800), les informations de capacité de bande passante RF étant utilisées pour indiquer une bande passante maximale prise en charge par au moins un module RF de l'équipement utilisateur (800) ;
la réception, par le dispositif de réseau, d'informations de capacité de resyntonisation RF (S650) en provenance de l'équipement utilisateur (800), les informations de capacité de resyntonisation RF étant utilisées pour indiquer un temps requis par l'équipement utilisateur (800) pour resyntoniser un emplacement de fréquence centrale RF ;
l'envoi, par le dispositif de réseau, d'informations de configuration de BP (S620) à l'équipement utilisateur (800), les informations de configuration de BP comprenant des informations qui sont utilisées pour indiquer une taille et un emplacement d'une BP dans une porteuse de composante, CC ;
la détermination, par le dispositif de réseau, d'informations de groupe de BP (S640) sur la base des informations de capacité de bande passante RF, des informations de configuration de BP, et de l'emplacement de fréquence centrale RF auquel l'équipement utilisateur (800) fonctionne actuellement, les informations de groupe de BP étant utilisées pour indiquer au moins un groupe de BP, l'un de l'au moins un groupe de BP comprenant au moins une BP, l'au moins un groupe de BP comprenant un premier groupe de BP, le premier groupe de BP comprenant une première BP, et lorsque le premier groupe de BP comprend en outre une deuxième BP, un intervalle de garde de resyntonisation de BP qui est requis lorsque l'équipement utilisateur (800) est commuté (S680) du premier BP à la deuxième BP étant de 0 symbole ;
l'envoi (S660), par le dispositif de réseau, des informations de groupe de BP déterminées à l'équipement utilisateur, le dispositif de réseau (1000) et l'équipement utilisateur (800) définissant l'intervalle de garde sur la base des informations de groupe de BP ; et
la bande passante combinée des BP dans le groupe de BP étant une bande passante couverte conjointement par toutes les BP dans le groupe de BP et la bande passante combinée du groupe de BP étant inférieure ou égale à la bande passante maximale.

6. Procédé selon la revendication 5, l'au moins un groupe de BP comprenant en outre un deuxième groupe de BP, et lorsque le deuxième groupe de BP comprend une troisième BP, un intervalle de garde de resyntonisation RF qui est requis lorsque l'équipement utilisateur (800) est commuté (S370) de la première BP à la troisième BP étant supérieur à 0 symbole.

7. Procédé selon l'une quelconque des revendications 5 et 6, avant la détermination, par le dispositif de réseau, d'informations de groupe de BP (S640), le procédé comprenant en outre : la réception, par le dispositif de réseau, de premières informations d'emplacement de fréquence centrale RF (S630) en provenance de l'équipement utilisateur (800), les premières informations d'emplacement de fréquence centrale RF étant utilisées pour indiquer l'emplacement de fréquence centrale RF auquel l'équipement utilisateur (800) fonctionne actuellement ; et
le procédé comprenant en outre : l'envoi, par le dispositif de réseau, des informations de groupe de BP (S660) à l'équipement utilisateur (800).

8. Procédé selon la revendication 7, la détermination, par le dispositif de réseau, d'informations de groupe de BP (S640) comprenant :
la détermination, par le dispositif de réseau, des informations de groupe de BP (S640) sur la base des informations de capacité de bande passante RF, des informations de configuration de BP, et des premières informations de localisation de fréquence centrale RF.

9. Procédé selon l'une quelconque des revendications 5 à 8, le procédé comprenant en outre :
l'envoi, par le dispositif de réseau, d'informations d'indication (S670) à l'équipement utilisateur (800), les informations d'indication étant utilisées pour ordonner à l'équipement utilisateur (800) d'être commuté (S370) de la première BP à la deuxième BP, et les informations d'indication comprenant un identifiant de la deuxième BP et un moment d'effet de travail de la deuxième BP.

10. Appareil comprenant des moyens pour mettre en oeuvre le procédé selon l'une quelconque des revendications 1 à 4.
